# EUROPÄISCHE PATENTSCHRIFT

(11) **EP 3 420 131 B1**
(45) Veröffentlichungstag und Bekanntmachung des Hinweises auf die Patenterteilung: **11.09.2019**
(21) Anmeldenummer: 17705139.8
(22) Anmeldetag: 15.02.2017
(51) Int. Cl.: D21B 1/02, D21B 1/32, D21B 1/34

(54) **ROTIERENDE TROMMEL ZUR BEHANDLUNG VON FASERSTOFF**
ROTATING DRUM FOR TREATING FIBROUS MATERIAL
TAMBOUR ROTATIF POUR LE TRAITEMENT DE MATIÈRE FIBREUSE

(30) Priorität: 25.02.2016 DE 102016202978
(43) Veröffentlichungstag der Anmeldung: 02.01.2019
(73) Patentinhaber: Voith Patent GmbH, 89522 Heidenheim (DE)
(72) Erfinder: BADER, Johannes, 88260 Argenbühl (DE); BARETH, Christoph, 88436 Eberhardzell (DE); SCHUSTER, Sebastian, 88281 Schlier-Oberankenreute (DE)
(86) Internationale Anmeldenummer: PCT/EP2017/053394
(87) Internationale Veröffentlichungsnummer: WO 2017/144322

(56) Entgegenhaltungen:
- DE-A1-102012 219 708
- US-A- 1 897 156

## Beschreibung

Die Erfindung betrifft eine rotierende Trommel zur Behandlung von Faserstoff, deren Rotationsachse höchstens 30° zur Horizontalen geneigt ist, mit einer Sortierzone, in die mit Wasser vermischter Faserstoff zugeführt wird und in der die Trommel perforiert ist, wobei eine Feinfraktion die Perforation durchströmt und eine Grobfraktion von dieser abgewiesen wird, wobei sich an eine Stirnseite der Sortierzone eine Trockenzone zur Trocknung der Grobfraktion anschließt.

Mit Hilfe einer solchen, beispielsweise aus der US 1 897 156 A bekannten Vorrichtung soll in vielen Fällen verschmutztes Altpapier mit Wasser vermischt, zerkleinert und sortiert werden. Hierzu wird in einer Auflösezone des meist liegenden Zylinders/Trommel das mit Wasser versetzte Altpapier durch Anheben, Rutschen und Fallen, bzw. Relativbewegungen der Stoffanteile zueinander, zerkleinert.

In der Sortierzone soll dann der gelöste Faserstoff von Unrat getrennt werden. Während die Feinfraktion die Perforation, d.h. die Sortieröffnungen passiert, wird die Grobfraktion mit dem Unrat abgewiesen und aus der Trommel geführt.

Die Auflösung kann auch in separaten Trommeln oder anderen Vorrichtungen erfolgen.

Die DE 10 2012 219 708 A1 offenbart eine rotierende Trommel zur Behandlung von Faserstoff mit einer Auflösezone und einer Sortierzone.

Verfahren zur Behandlung von Altpapier, die mit solchen oder ähnlichen Trommeln arbeiten, haben den Vorteil einer besonders schonenden Auflösung, sowohl was empfindliche Fasersorten als auch sortierbar zu erhaltende, unerwünschte Begleitstoffe betrifft.

Allerdings lässt sich die Grobfraktion wegen ihres hohen Gewichtes und der Rutschneigung insbesondere auf Förderbändern nur schwer weitertransportieren.

Die Aufgabe der Erfindung ist es daher die Transportfähigkeit der Grobfraktion zu verbessern.

Erfindungsgemäß wurde die Aufgabe durch die kennzeichnenden Merkmale des Anspruchs 1 gelöst. In der Trockenzone wird der Feuchtegehalt der Grobfraktion soweit gesenkt, dass sich diese wesentlich leichter weitertransportieren lässt und insbesondere auf Förderbändern weniger zum Rutschen neigt.

Zur Trocknung der Grobfraktion sind in der Trockenzone an der Innenwand der Trommel Förderelemente angeordnet, welche Wasser in Richtung Sortierzone transportieren.

Alternativ oder ergänzend ist zwischen der Sortierzone und der Trockenzone ein Begrenzungsring angeordnet, um einen Transport zwischen den Zonen zu ermöglichen, aber dennoch eine gewisse Abgrenzung der Zonen zu gewährleisten, und zwecks Senkung des Feuchtegehaltes der Grobfraktion sind an dem zwischen Sortier- und Trockenzone vorhandenen Begrenzungsring Schöpfleisten zur Rückführung von Wasser aus der Trockenzone in die Sortierzone angeordnet.

Zur Vereinfachung der Konstruktion und zur Minimierung des Aufwandes sollte sich an der, der Trockenzone gegenüberliegenden Stirnseite der Sortierzone eine Auflösezone anschließen, in die der Faserstoff zugegeben und in der dieser zur Bildung einer Faserstoffsuspension mit Wasser vermischt wird.

Der Mantel der Trommel ist im Bereich der Auflösezone nicht perforiert ausgeführt. Zur Unterstützung der Bewegung, insbesondere des Anhebens der Faserstoffsuspension besitzt die Trommel in der Auflöse- und/oder Sortierzone an ihrer Innenwand eine oder mehrere Hebeleisten ohne und/oder mit axialer Förderwirkung.

Statt der Hebeleisten können aber beispielsweise auch Förderspiralen zum Einsatz kommen.

Ergänzend kann der Rückfluss des Wassers von der Trockenzone in die Sortierzone auch über Durchbrüche im, zwischen der Sortier- und Trockenzone vorhandene Begrenzungsring unterstützt werden.

Des Weiteren ist es zur Trocknung der Grobfraktion von Vorteil, wenn in der Trockenzone an der Innenwand der Trommel Förderelemente angeordnet sind, welche Wasser in Richtung Sortierzone transportieren.

Die Stoffdichte in der Auflösezone liegt bei ca. 18%, was für die Sortierung viel zu hoch ist. Da der Faserstoff zu zäh ist, um die Perforation der Sortierzone zu passieren, sollte Wasser im Bereich der Sortierzone von außen und/oder von oben auf die Trommel gesprüht werden.

Außerdem sollte unterhalb der Sortierzone ein Auffangbehälter zur Aufnahme der Feinfraktion sowie des auf der Oberfläche der Trommel ablaufenden Wassers angeordnet sein.

Der Feuchtegehalt der Faserstoffsuspension in der Sortierzone kann noch über die Zuführung von weiterem Verdünnungswasser in Form eines freien Verdünnungswasserstrahls erhöht werden.

Zur Realisierung eines einfachen und sicheren Abtransports der Grobfraktion sollte die freie Stirnseite der Trockenzone einen Auslass für die Grobfraktion besitzen. Dies ermöglicht es, den Verdünnungswasserstrahl zur Vereinfachung der Konstruktion über den Auslass einzuleiten.

Dieser Verdünnungswasserstrahl sollte möglichst sicher an der fallenden Grobfraktion innerhalb der Trockenzone vorbei geführt werden.

Außerdem sollte die Rotationsachse der Trommel möglichst waagerecht oder höchstens um 30° geneigt zur Waagerechten verlaufen.

Nachfolgend soll die Erfindung an einem Ausführungsbeispiel näher erläutert werden.

In der beigefügten Zeichnung zeigt:
Figur 1: einen schematischen Längsschnitt durch eine erfindungsgemäße Trommel;
Figur 2: einen Querschnitt durch die Sortierzone 2 der Trommel und
Figur 3: eine Innenansicht der Trockenzone 4.

Die zylindrische Trommel ist normalerweise außen auf Rollen gelagert und wird über einen Antrieb in Rotation versetzt, wobei die Rotationsachse 3 geringfügig geneigt zur Waagerechten verläuft. Diese geringe Neigung unterstützt den Transport in Richtung Auslass 11.

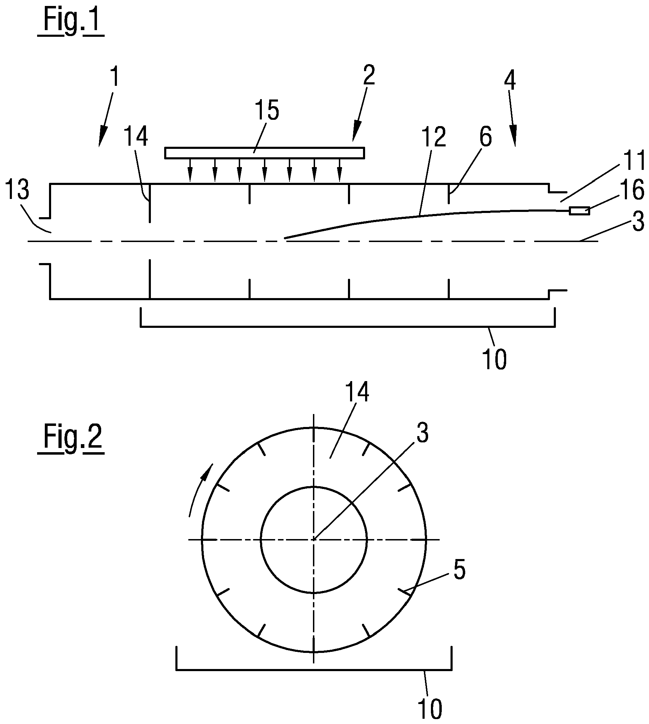

Zur Auflösung des Altpapiers besitzt die Trommel gemäß Figur 1 an die linke Stirnseite angrenzend eine Auflösezone 1 mit einem Einlass 13. In der Auflösezone 1 wird das Altpapier intensiv mit Wasser vermischt, wobei es infolge der Hebe-, Rutsch- und Fallbewegungen zu einer Zerkleinerung des aufgeweichten Papiermaterials kommt.

Die Zuführung des Faserstoffs erfolgt meist über einen feststehenden Einlauf-Trichter. Dabei wird der zur Rotationsache 3 geneigte Einlauf-Trichter in der Mitte der Stirnseite in die Trommel geführt.

Um die Bewegung des Altpapiers sowie der dabei entstehenden Faserstoffsuspension zu unterstützen, besitzt die Trommel entsprechend Figur 2 auf der Innenseite Hebeleisten 5 o.ä. Einbauten. Solche Einbauten sind in vielfältiger Form bekannt und werden auf den jeweiligen Verwendungszweck abgestimmt.

Die bei dieser Auflösung entstehende Faserstoffsuspension hat eine Stoffdichte von ca. 18% und ist somit für eine Lochsortierung nicht geeignet.

Daher wird diese Faserstoffsuspension in einer sich stirnseitig an die Auflösezone 1 anschließenden Sortierzone 2 mit Wasser verdünnt.

Die Abgrenzung beider Zonen 1,2 erfolgt meist über einen radial außen verlaufenden Begrenzungsring 14 in Form eines ringförmigen Bleches, welcher eine Stauwirkung hat und einen Sumpf bildet.

Im Unterschied zur Auflösezone 1 hat die Trommel im Bereich der Sortierzone 2 eine Perforation, durch die die Feinfraktion nach außen gelangen kann.

Die meist größeren Störstoffe werden von dieser Perforation abgewiesen und in Form einer Grobfraktion bzw. des Rejekts über den Auslass 11 an der Stirnseite der Trommel abgeführt.

Unterhalb der Sortierzone 2 befindet sich ein Auffangbehälter 10 zur Aufnahme der Feinfraktion. Oberhalb der Sortierzone 2 ist eine Sprüheinrichtung 15 angeordnet, welche Wasser auf die Perforation richtet. Dies reinigt die Perforation und führt außerdem zu einer weiteren Verdünnung der Faserstoffsuspension innerhalb der Sortierzone 2.

Allerdings gelangt hierbei nur etwa 50 bis 60% des aufgesprühten Wassers in die Sortierzone 2. Der andere Teil des Wassers läuft außen an der Trommel entlang in den Auffangbehälter 10.

Um die Sortierzone 2 möglichst umfassend nutzen zu können, wird die Faserstoffsuspension zusätzlich mit Wasser verdünnt, so dass die Feinfraktion problemlos die Perforation passieren kann.

Im Interesse einer einfachen Konstruktion erfolgt die Zuführung des Verdünnungswassers über einen Verdünnungswasserstrahl 12, der über eine Düse 16 am Auslass 11 durch die Trockenzone 4 in die Sortierzone 2 gerichtet ist.

Damit der Verdünnungswasserstrahl 12 die Grobfraktion innerhalb der Trockenzone 4 problemlos passieren kann, läuft der Verdünnungswasserstrahl 12, wie in Figur 2 zu sehen, möglichst am fallenden Rejekt vorbei.

Für eine ausreichende Durchmischung besitzt auch die Sortierzone 2 an der Innenseite Hebeleisten 5 o.ä.

An die Sortierzone 2 schließt sich stirnseitig gegenüber der Auflösezone 1 eine Trockenzone 4 zur Trocknung der Grobfraktion an.

Durch die Erhöhung des Trockengehaltes der Grobfraktion verringert sich nicht nur deren Gewicht sondern ebenso die Rutschneigung auf glatten Oberflächen, wie einem Förderband.

Zur Abgrenzung der Zonen ist auch zwischen der Sortierzone 2 und der Trockenzone 4 ein Begrenzungsring 6 angeordnet.

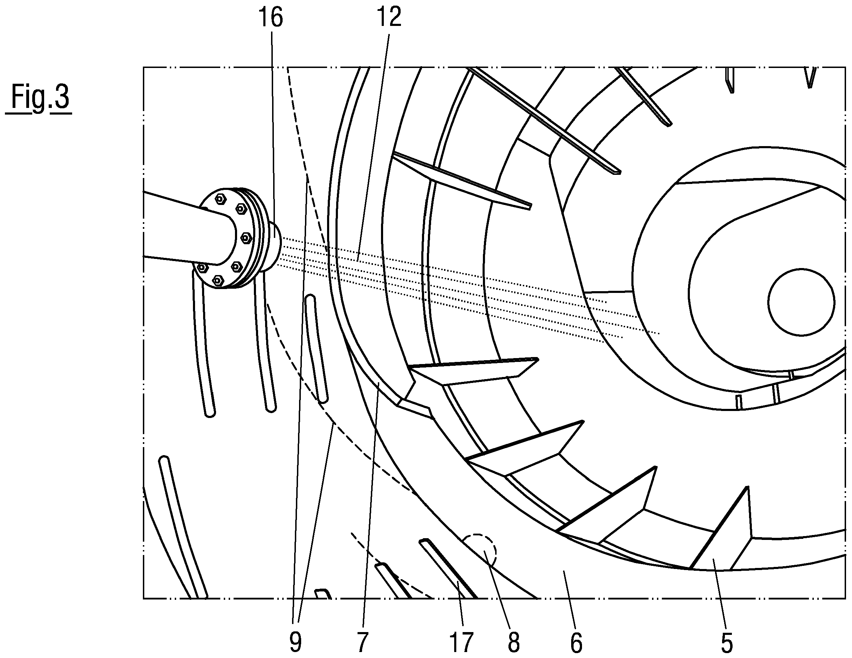

Wie in Figur 3 zu erkennen, besitzt dieser Begrenzungsring 6 auf der, der Trockenzone 4 zugewandten Seite Schöpfleisten 7 zur Rückführung von Wasser aus der Trockenzone 4 über den Begrenzungsring 6 hinweg in die Sortierzone 2. Ergänzend kann dieser Begrenzungsring 6 auch Durchbrüche 8 aufweisen.

Um das Wasser innerhalb der Trockenzone 4 zur Sortierzone 2 hin zu fördern, sind an der Innenwand der Trommel Förderelemente 9 hier als spiralförmige Leiste angebracht.

Zusätzliche Förderleisten 17 an der Innenwand unterstützen den Transport der Grobfraktion in Richtung Auslass 11 an der Stirnseite der Trommel bzw. der freien Stirnseite der Trockenzone 4.

## Patentansprüche

1. Rotierende Trommel zur Behandlung von Faserstoff, deren Rotationsachse (3) höchstens 30° zur Horizontalen geneigt ist, mit einer Sortierzone (2), in die mit Wasser vermischter Faserstoff zugeführt wird und in der die Trommel perforiert ist, wobei eine Feinfraktion die Perforation durchströmt und eine Grobfraktion von dieser abgewiesen wird, wobei sich an eine Stirnseite der Sortierzone (2) eine Trockenzone (4) zur Trocknung der Grobfraktion anschließt, **dadurch gekennzeichnet, dass** in der Trockenzone (4) an der Innenwand der Trommel Förderelemente (9) angeordnet sind, welche Wasser in Richtung Sortierzone (2) transportieren und/oder zwischen der Sortierzone (2) und der Trockenzone (4) ein Begrenzungsring (6,14) angeordnet ist, an dem Schöpfleisten (7) zur Rückführung von Wasser aus der Trockenzone (4) in die Sortierzone (2) angeordnet sind.

2. Rotierende Trommel nach Anspruch 1, **dadurch gekennzeichnet, dass** sich an der, der Trockenzone (4) gegenüberliegenden Stirnseite der Sortierzone (2) eine Auflösezone (1) anschließt, in die der Faserstoff zugegeben und in der dieser zur Bildung einer Faserstoffsuspension mit Wasser vermischt wird.

3. Rotierende Trommel nach Anspruch 2, **dadurch gekennzeichnet, dass** die Trommel in der Auflöse- (1) und/oder Sortierzone (2) an ihrer Innenwand eine oder mehrere Hebeleisten (5) besitzt.

4. Rotierende Trommel nach einem der vorhergehenden Ansprüche, **dadurch gekennzeichnet, dass** der zwischen Sortier- (2) und Trockenzone (4) vorhandene Begrenzungsring (6) Durchbrüche (8) aufweist.

5. Rotierende Trommel nach einem der vorhergehenden Ansprüche, **dadurch gekennzeichnet, dass** Wasser im Bereich der Sortierzone (2) von außen und/oder von oben auf die Trommel gesprüht wird.

6. Rotierende Trommel nach einem der vorhergehenden Ansprüche, **dadurch gekennzeichnet, dass** unterhalb der Sortierzone (2) ein Auffangbehälter (10) zur Aufnahme der Feinfraktion angeordnet ist.

7. Rotierende Trommel nach einem der vorhergehenden Ansprüche, **dadurch gekennzeichnet, dass** die freie Stirnseite der Trockenzone (4) einen Auslass (11) für die Grobfraktion besitzt.

8. Rotierende Trommel nach Anspruch 7, **dadurch gekennzeichnet, dass** ein Verdünnungswasserstrahl (12) über den Auslass (11) eingeführt wird.

## Claims

1. Rotating drum for the treatment of fibrous material, the rotation axis (3) of said rotating drum in relation to the horizontal being inclined by at most 30°, having a sorting zone (2) into which fibrous material mixed with water is fed and in which the drum is perforated, wherein a fine fraction flows through the perforation and a coarse fraction is rejected by said perforation, wherein a drying zone (4) for drying the coarse fraction adjoins an end side of the sorting zone (2), **characterized in that** conveyor elements (9) which transport water in the direction of the sorting zone (2) are disposed on the interior wall of the drum in the drying zone (4), and/or a delimitation ring (6, 14), scooping strips (7) for returning water from the drying zone (4) to the sorting zone (2) being disposed thereon, is disposed between the sorting zone (2) and the drying zone (4).

2. Rotating drum according to Claim 1, **characterized in that** a dissolving zone (1) into which the fibrous material is added and in which said fibrous material is mixed with water for forming a fibrous suspension adjoins the end side of the sorting zone (2) that is opposite the drying zone (4) .

3. Rotating drum according to Claim 2, **characterized in that** the drum in the dissolving zone (1) and/or the sorting zone (2) on the interior wall of said drum possesses one or a plurality of lifting strips (5).

4. Rotating drum according to one of the preceding claims, **characterized in that** the delimitation ring (6) that is present between the sorting zone (2) and the drying zone (4) has penetrations (8).

5. Rotating drum according to one of the preceding claims, **characterized in that** water is sprayed onto the drum from the outside and/or from the top in the region of the sorting zone (2).

6. Rotating drum according to one of the preceding claims, **characterized in that** a collection container (10) for receiving the fine fraction is disposed below the sorting zone (2).

7. Rotating drum according to one of the preceding claims, **characterized in that** the free end side of the drying zone (4) possesses an outlet (11) for the coarse fraction.

8. Rotating drum according to Claim 7, **characterized in that** a diluting water jet (12) is introduced by way of the outlet (11).

## Revendications

1. Tambour rotatif pour le traitement de matière fibreuse, dont l'axe de rotation (3) est incliné au maximum de 30° par rapport à l'horizontale, avec une zone de tri (2) dans laquelle on charge une matière fibreuse mélangée à de l'eau et dans laquelle le tambour est perforé, dans lequel une fraction fine traverse la perforation et une fraction grossière est refusée par celle-ci, dans lequel une zone de séchage (4) se raccorde à un côté frontal de la zone de tri (2) pour le séchage de la fraction grossière, **caractérisé en ce que** des éléments de transport (9), qui transportent de l'eau en direction de la zone de tri (2), sont disposés sur la paroi intérieure du tambour dans la zone de séchage (4) et/ou un anneau de limitation (6, 14) est disposé entre la zone de tri (2) et la zone de séchage (4), sur lequel sont disposées des lamelles de reprise (7) destinées à renvoyer de l'eau de la zone de séchage (4) à la zone de tri (2).

2. Tambour rotatif selon la revendication 1, **caractérisé en ce qu'**une zone de désagrégation (1) se raccorde au côté frontal de la zone de tri (2) situé à l'opposé de la zone de séchage (4), dans laquelle la matière fibreuse est chargée et dans laquelle celle-ci est mélangée à de l'eau pour former une suspension de matière fibreuse.

3. Tambour rotatif selon la revendication 2, **caractérisé en ce que** le tambour comporte dans la zone de désagrégation (1) et/ou la zone de tri (2) une ou plusieurs lamelles de relèvement (5) sur sa paroi intérieure.

4. Tambour rotatif selon l'une quelconque des revendications précédentes, **caractérisé en ce que** l'anneau de limitation (6) présent entre la zone de tri (2) et la zone de séchage (4) présente des traversées (8) .

5. Tambour rotatif selon l'une quelconque des revendications précédentes, **caractérisé en ce que** de l'eau est projetée par l'extérieur et/ou par le haut sur le tambour dans la région de la zone de tri (2).

6. Tambour rotatif selon l'une quelconque des revendications précédentes, **caractérisé en ce qu'**un réservoir de collecte (10) est disposé en dessous de la zone de tri (2) pour recevoir la fraction fine.

7. Tambour rotatif selon l'une quelconque des revendications précédentes, **caractérisé en ce que** le côté frontal libre de la zone de séchage (4) comporte une sortie (11) pour la fraction grossière.

8. Tambour rotatif selon la revendication 7, **caractérisé en ce qu'**un jet d'eau de dilution (12) est introduit par la sortie (11).
